# EUROPEAN PATENT SPECIFICATION

(11) **EP 2 846 626 B1**
(45) Date of publication and mention of the grant of the patent: **21.12.2016**
(21) Application number: 13731860.6
(22) Date of filing: 08.05.2013
(51) Int. Cl.: A01K 1/015, C05D 9/00, C05F 3/00, C05F 11/00, C05F 17/00

(54) **BEDDING FOR UNGULATES AND ITS RECYCLING INTO COMPOST**
STREU FÜR HUFTIERE UND RECYCLING DAVON IN KOMPOST
LITIÈRE POUR ONGULÉS ET SON RECYCLAGE EN COMPOST

(30) Priority: 11.05.2012 HR P20120403
(43) Date of publication of application: 18.03.2015
(73) Proprietor: Herba Tetra d.o.o., 47000 Karlovac (HR)
(72) Inventor: VOLNER, Matija, 47000 Karlovac (HR)
(74) Representative: Tomsic Skoda, Slavica
(86) International application number: PCT/HR2013/000010
(87) International publication number: WO 2013/167918

(56) References cited:
- EP-A1- 0 808 564
- GB-A- 2 411 334
- US-B1- 6 474 267

## Description

### Technical Field

The present invention relates to bedding for ungulate and other animals, which consists of dust-freed wood pellets obtained from soft broad-leaved and coniferous trees and nutrient medium for composting bacteria. The bedding is supplemented with medicinal herbs selected from: lavender (*Lavandula angustifolia),* lavandin *(Lavandula x intermedia),* laurel (*Laurus nobilis*)*,* marigold (*Calendula officinalis*) and Lemon balm (*Mellisa officinalis*). The patent further relates to the bedding composting procedure, and the use of the bedding as a preventive agent against lesions and pneumonia in animals in intensive farming.

### Background

A variety of beddings have been used in stables throughout history. The most common bedding used is either straw obtained from different grain crops, or grasses not suitable for use as feed. Wood shavings, wood pellets and sawdust have also been used in recent times. Wood shavings with added bacteria and equine digestive enzymes to extend the lifetime of the bedding in stables are available on the market. The shortcomings of such beddings are, however, numerous.

Straw most certainly presents the worst possible option for bedding, due to its poor hygroscopic capacity - it soaks through quickly, does not dehydrate droppings and does not disintegrate ammonia. If not mucked out on a daily basis it can lead to serious hoof diseases, lung oedema or pneumonia. Lesions and pneumonia caused by ammonia have been known to develop in animals, especially under conditions of intense farming (http://www.atsdr.cdc.gov/toxprofiles/tp126-c3.pdf), usually ending in forced slaughter of animals, and thus great losses.

Animal bedding of dust extracted absorbent wood shavings, combined with an infusion of diluted essential oils are disclosed in GB2411334. Wood shavings and sawdust have shown a somewhat improved longevity, i.e. they can be kept under a horse for two to three days, before they have to be mucked out from the stall. The disposal of this variety of bedding is an issue because wood fractions contained therein do not compost well due to their large size. In Germany, for example, the users of this type of bedding have to pay for its disposal after usage, because it is treated as stall waste. This adds significantly to the manure management costs.

Bedding for horses, which includes a homogeneous mixture of wood shavings and an enzymatic-bacterial composition are disclosed in EP0808564A1.

The company Alpenspaan in Austria has developed a bedding system consisting of wood shavings with added equine enzymes (Alpenspaan exquisit - http://www.alpenspan.at/en/products/-6) which bind ammonia, thus extending the bedding lifetime In a stall to four to five months. However, it involves an extensive amount of work and monitoring because the droppings, as well as urine-soaked shaving clumps have to be continuously mucked out due to the fact that moist destroys the enzymes which are essential for the functionality of this bedding type.

Pelletized animal bedding are disclosed in US6474267B1. There are numerous manufacturers of wood pellets for horse bedding. For example, "White Horse Bedding" or "Guardian Horse Bedding", using wood of soft broad-leaved and coniferous trees, which are also cleaned. Such pellets may remain in a stall up to max. seven days, after which they have to be removed as waste. "White Horse Bedding" has anticipated possible composting the manure with their pellets, but the composting process lasts for more than a year.

The subject invention simultaneously solves the problem of daily removal of bedding from stalls, involving a lot of time-consuming hard work, the problem of the disposal of wood bedding which is treated as waste, as well as the problem of the long-lasting composting process.

### Summary

This invention relates to bedding for ungulate and other animals, which consists of dust-freed wood pellets or sawdust and nutrient medium for accelerated growth of composting bacteria, which is the brown alga Ascophyllum nodosum.

The wood pellets are obtained from soft broad-leaved and coniferous trees.

The nutrient medium function is to accelerate the composting process and growth of composting bacteria which degrade ammonia from urine.

The invention further relates to bedding for ungulate and other animals, which comprises dust-freed wood pellets, nutrient medium for accelerated growth of composting bacteria and one or more species of medicinal herbs selected from: lavender (*Lavandula angustifolia*)*,* lavandin (*Lavandula* x *intermedia*), laurel (*Laurus nobilis*), marigold (*Calendula officinalis*) and Lemon balm (*Mellisa officinalis*).

The invention further relates to the procedure of recycling the bedding into compost, which includes the following stages: (a) the use of the bedding in a stable with ungulate or other animals until it becomes saturated and compacted; (b) the piling of the used bedding on a flat ground surface to make a 80-100 mm layer; (c) adding water to the pile and leaving it to rest for 2-3 months.

The invention further relates to using the bedding as preventive agent against lesions and pneumonia in animals in intensive farming.

### Description of the Embodiments

One aspect of this invention is bedding consisting of wood pellets and nutrient medium, wich is the brown alga Anscophyllum rodosum.

Wood pellets are preferably dust-freed and obtained from soft broad-leaved or coniferous trees, which excludes any possibility of introducing the types of wood that might be harmful or toxic to animals, such as common walnut *Juglans regia)* or black walnut (*Juglans nigra*).

In one aspect the brown alga is in form of powder.

In one aspect the nutrient medium for composting bacteria preferably comprises the powder of brown alga *Ascophylluin nodosum,* montmorillonite and bitter salt.

The function of nutrient medium is to accelerate the composting process and growth of composting bacteria which degrade ammonia from urine. The prefereble mass percentage of added nutrient agent in relation to the mass of pellets is 5 % (w/w).

Another aspect of this invention is bedding consisting of wood pellets, nutrient medium and one or more species of medicinal herbs.

Medicinal herbs added to the bedding are selected from a group including lavender, lavandin, laurel, Lemon balm and marigold. The preferred mass percentages of the medicinal herbs added to the pellets are: up to 2 % (w/w) lavender and/or lavandin, up to 2 % (w/w) laurel, up to 2 % (w/w) Lemon balm and up to 2 % (w/w) marigold.

The herbs nurture and disinfect the hoof and skin, repel insects, act anti inflammatory, stimulate tissue regeneration, etc.

One aspect of this invention is bedding for ungulate and other animals and its recycling into compost, characterised by the use of added nutrient medium to boost the growth of composting bacteria which disintegrate the ammonia from urine and liquid parts of manure and significantly accelerate the process of decomposition, i.e. the recycling of the bedding into compost.

After the animals pass urine into the bedding, the nutrient agent for composting bacteria induces their fast growth and they quickly degrade ammonia, thus extending the longevity of the bedding material in the stall. The water generated in the process evaporates easily because of a large evaporation surface provided by fine-textured wood particles. All this results in an odour free stable. After 20 to 60 days of use, the bedding is mucked out of the stall and deposited onto a clean and flat ground surface, to form a pile 80 to 100 cm high.

The term "clean" in this context means that the receiving area must be stripped to the ground and must not be polluted by pesticides, herbicides, mineral oils, solvents or any other harmful materials or substances. The term "flat" in this context means that the composting mass should not be deposited into a hole dug in the ground, because a possible accumulation of water in such a hole might initiate certain undesirable anaerobic processes in the composting mass.

The bedding can be used for horses and other ungulates (eg. bovine animals, sheep, goats, pigs, etc.) kept in stables, or for poultry in chicken coops. It is also applicable for house pets - rodents, cats, and the like, but in such cases the quantity of bedding has to be adjusted to the size of the animal and its cage or its litter box, respectively. The bedding can be used in stables, roofed pens, cages and the like, for the animals as specified.

The bedding provides for excellent hygiene and health conditions owing to the features of wood dust-freed pellets and added mixture of nutrient medium and medicinal herbs. Long lasting dryness of this bedding prevents development of pathogenic bacteria which usually affect hooves. Besides, the horses kept in stalls bedded with the described mixture of pellets and specified additives remain dry and clean and there is no need to brush them every day.

The bedding with added nutrient medium, compared to beddings without this addition, multiply accelerates the growth of composting bacteria which disintegrate ammonia from urine and liquid part of droppings, which might otherwise be detrimental for the animal health. Therefore the bedding can stay usable in a stall with one horse for up to 60 days, with no odour at all.

The medicinal herbs added in the specified combination provide multiple effects. Lavender and lavandin sooth the animal, disinfect its skin and hooves, act anti inflamatory and repel insects. Laurel nurtures the hoof and acts as a disinfectant. Lemon balm is extremely beneficial for the skin and the hooves, reducing inflammation and improving general status of the skin. Marigold stimulates tissue regeneration in Wounds, reduces pain and nurtures the hoof.

The bedding based on our invention can be used and stay dry, without developing any harmful substances or microorganisms, for a period of up to 60 days, presenting or contributing to healing of many hoof, skin and respiratory tract diseases. The use of such bedding facilitates hoof hygiene and improves hair quality, which makes grooming easier.

The bedding also prevents lesions and pneumonia caused by ammonia. The use of the bedding completely eliminates these problems, because the ammonia causing them degrades very quickly and consequently the illness has no time to develop.

The bedding produced by the described procedure reduces stable work, including bedding and manure handling as well as grooming, thus reducing the related costs to a minimum. It also solves the problem of waste bedding disposal.

At the end of the period of use the bedding is removed from the stall and deposited onto a clean and flat ground surface, sprinkled with water and left to rest for two to three months, to obtain high quality, ripe compost, without any weed seeds, providing an extra benefit for the stable owner.

### Example 1 - Packaging

The bedding is packed in 15 kg plastic bags with addition of up to 5 % (w/w) nutrient agent mixture, plus up to 2 % (w/w) lavender and/or lavandin, up to 2 % (w/w) laurel, up to 2 % (w/w) Lemon balm and up to 2 % (w/w) marigold.

The nutrient agent mixture consists of up to 90 % (w/w) brown alga (Ascophyllum nodosum) powder, up to 8 % (w/w) montmorillonite and up to 2 % (w/w) bitter salt.

Moisture content in all additives must be up to 12 %.

### Example 2 - Use

To set up a standard English stall (3.3 m x 3.3 m), the contents of six 15-kg bags of bedding (as described in Example 1) are required i.e. (0.6 bag / m²). The bedding should be spread evenly over the entire floor surface with a fork. Approximately four litres of water per bag should be evenly sprinkled over the bedding (eg. with a sprinkling can) to initiate the pellets opening to a "fluffy" consistency. The water serves to break down the resin sheen on the sides of the pellet. By this procedure the volume of the 90 kg of pellets grows to almost one cubic meter of fluffy wood material. Such bedding is lavish, dry and ideal for horses or other animals. As the pellets are dust-free, the bedding does not affect the respiratory tract of the animal.

Once a day the bedding must be turned and fluffed with a fork, allow the air to enter the bedding, and at the same time to remove the manure. Since the solid manure separates easily from the fine wood fibres, very little of the bedding material is actually removed from the stall with the manure. This is the only bedding-related work to be done on a daily basis, which is significantly less than the work required to handle other known types of bedding.

After 20 to 60 days since placing the bedding into a stall, which period is determined by horses' habits, size, nutrition, water consumption and other factors influencing the amount of urine produced by a horse, it becomes saturated and compacted and therefore not suitable for further use, so it has to be removed from the stall. The removed bedding is deposited on a clean and flat ground surface, in piles 80 to 100 cm high, which have to be lavishly sprinkled with water.

The nutrient medium boosts the composting process, during which the temperature within the compost pile rises to 80 °C owing to thermophilic bacteria. At this temperature all pathogens and weed seeds are destroyed. The compost thus obtained is of much better quality than, for example, the compost produced using Californian earthworms, in which case the composting mass temperature does not exceed 40 °C, which allows weed seeds and pathogens in the compost to remain viable.

After resting for 2 to 3 months, high-quality compost is obtained, the mass of which multiply exceeds the input mass and volume of the bedding.

Out of the original bedding mass of 90 kg, after 30 days of use in the stall, the mass increases to 350 kg. The final result is 700 litres of compost, the market value of which is twice higher than the price of originally used pellets. The compost produced by the described method is rich with nitrogen, phosphorus and especially potassium due to the composition of the nutrient medium and horse manure.

The bedding as described, after being used and composted, becomes a new marketable and profitable product. Besides it fully complies with the provisions of the Council Directive 91/676/EEC of 12 December 1991 concerning the protection of waters against pollution caused by nitrates from agricultural sources, as regards the reduction of water pollution resulting from the spreading or discharge of livestock effluents and the excessive use of fertilizers.

### Example 3 - compost mixture sample analysis results

Compost obtained as described in Example 2 was analysed and the results thereof are given in Table 1.

**Table 1.**

| Sample No. | Sample identification No. | pH | | mg/ 100g soil | | N | CaCO₃ |
|---|---|---|---|---|---|---|---|
| | | H₂O | 1M KCl | P₂O₅ | K₂O | % | % |
| 93/12 | 2.3.2012. | 7.22 | 7.36 | 53.10 | 598.50 | 0.60 | 0.84 |
| 94/12 | 6.3.2012. | 8.12 | 7.90 | 125.10 | 855.00 | 0.85 | 2.52 |

Chemical analyses of the compost samples (93-94/12) have been carried out in accordance with the following:
1. Preparation of the samples for the analysis of macroelements (UN EC ICP Forests, 2006: Soil Sampling and Analysis)
2. Determination of pH in H₂O i n-KCl (ISO 10390, 1995: Soil Quality - Determination of p_{H})
3. Determination of total nitrogen content, using CNS 2000 analyzer (ISO 13878, 1995: Soil Quality - Determination of total nitrogen content by dry combustion ("elemental analysis"))
4. Determination of plant-accessible P₂O₅ and K₂O (Škorić, A., 1982: Pedologic Research Manual, University of Zagreb, Faculty of Agriculture)
5. Volumetric determination of CaCO₃ (ISO 10693, 1995: Soil Quality- Determination of carbonate content - Volumetric method)

### Effects of the bedding to animal (horse) health

### Example 4

The Bedding was tested in the stable facilities which include 18 stalls. At the time of testing it accommodated 16 horses. 5 stalls were set up with the pellet bedding for ungulate and other animals, produced in accordance with Example 1, and the health status of each animal kept therein was monitored by the farm owner and his staff, as well as by a veterinarian who performed several blood tests and regular examinations of the skin, the coat, the hooves and the respiratory tract.

2 stalls were bedded with plain wood pellets, and 9 stalls with straw. The stalls set up with plain pellets had to be mucked out after only two days because the pellets became wet and saturated with urine, smelly and not suitable for further use. The straw bedding had to be mucked out every day, for the same reasons.

On the other hand, the bedding with additives, produced according to our invention was used for 32 days in a row.

During that time the bedding showed several extraordinary beneficial properties.

The most evident change was observed in the state and appearance of the hooves. Throughout the testing period the hooves (the hoof wall, sole and frog) stayed completely dry and clean, which is of essential importance for their condition and health. The quality of the walls and soles of the hoof improved, which resulted in minimum or no maintenance required, unlike the hooves of the horses kept on plain pellets and straw, which had to be cleaned and washed on a daily basis. The same observations apply to the skin and coat of the observed animals, which remained dry, clean and shiny and improved with time, reducing the need for grooming to a minimum.

Besides, the horses obviously liked the dry clean bedding, devoid of unpleasant moisture or irritating stench, and they showed their pleasure by frequently rolling in the bedding with joy.

Blood tests performed did not show any signs of reactions to allergens, and the count of white blood cells remained at optimum levels. During the testing the horses showed no signs of pathological changes in the skin, hooves or respiratory tract, no allergic reactions, or any other detrimental effects of the bedding. Hence the conclusion that the bedding is not harmful for the animals.

### Example 5

The Bedding (as described in Example 1) contributed to the hoof healing in a mare of the Holsteiner breed, suffering from the White Line Disease. An animal kept in a stall with a standard bedding type (straw, plain pellets, shavings) usually takes 2-6 months to heal under standard treatment with antibiotics and other medicines. In the case of mare of the Hoisteiner breed, using the bedding according to this invention, the healing took only 3 weeks:
The mare lived in an English box with concrete floor surface covered with straw bedding. Farrier noticed mostly on hind hooves, the White Line Disease. The hooves were trimmed and all the necrotic parts of infected hoof wall were removed. Ten weeks later, because of the fact the bedding type was still the same (straw), advanced White Line Disease was found. Hooves had very strong odour of urine and manure and were very soft and moist. The hooves were trimmed removing significant parts of infected hoof wall. The straw bedding was replaced with bedding according to this invention. Three weeks after start of using bedding according to this invention tremendous improvement of hooves condition were noticed. Any sign of new infected and necrotic tissue were found. The frog was healthy, solid, and compact. In collateral grooves as well as in central sulcus of the frog no trace of infection were found. The white line had normal yellowish color all the length long. The surfaces around bars, heel buttresses and the seat-of-corn was clean and sound. Hoof wall started to show the sign of recovery and healthy growth. Hooves were completely odorless and dry.

## Claims

1. A bedding for ungulate and other animals **characterized by that** it comprises:
a) wood pellets
b) nutrient medium which is the brown alga *Ascophyllum nodosum.*

2. A bedding as claimed in claim 1, **characterized by that** the nutrient medium further comprises montmorillonite and bitter salt.

3. A bedding as claimed in any of claims 1 - 2 **characterized by that** the nutrient medium is added in the quantity of 1-5 % (w/w) in relation to the mass of the wood pellets.

4. A bedding as claimed in any of claims 1 - 3 **characterized by that** the bedding in addition contains one or more species of medicinal herbs selected from lavender, lavandin, laurel, Lemon balm and marigold.

5. A bedding as claimed in claim 4, **characterized by that** the medicinal herbs are added in the quantities of up to 2 % (w/w) lavender and/or lavandin, up to 2 % (w/w) laurel, up to 2 % (w/w) Lemon balm and up to 2 % (w/w) marigold in relation to the mass of wood pellets.

6. The use of the bedding as claimed in any of the claims 1 - 5 **characterized by that** that it serves as a preventive agent against lesions or pneumonia in animals in intensive farming.

## Patentansprüche

1. Einstreu für Huf- und sonstige Tiere, **dadurch gekennzeichnet, dass** es:
a) Holzpellets
b) Nährstofunterlage, welche die Braunalge *Ascophyllum nodosum* ist, enthält.

2. Einstreu nach Anspruch 1, **dadurch gekennzeichnet, dass** die Nährstoffunterlage weiterhin Montmorillonit und Bittersalz enthält.

3. Einstreu nach irgend einem der Ansprüche 1 - 2, **dadurch gekennzeichnet, dass** die Nährstoffunterlage in der Menge von 1-5 % (Gewichtsanteil) im Verhältniss zur Masse der Holzpellets beigefügt ist.

4. Einstreu nach irgend einem der Ansprüche 1 - 3, **dadurch gekennzeichnet, dass** die Nährstoffunterlage zusätzlich eine oder mehrere Arten von Heilkräutern enthält, ausgewählt unter Lavendel, Lavandin, Lorbeer, Melisse und Ringleblume.

5. Einstreu nach Anspruch 4, **dadurch gekennzeichnet, dass** die Heilkräuter in Mengen bis 2% (Massenanteil) Lavendel und/oder Lavandin, bis zu 2% (Massenanteil) Lorbeer, bis zu 2% (Massenanteil) Melisse und bis zu 2% (Massenanteil) Ringelblume im Verhältnis zur Masse der Holzpellets beigefügt sind.

6. Verwendung der Einstreu wie in irgend einem der Ansprüche 1 - 5 angeführt, **dadurch gekennzeichnet, dass** sie zur Vorbeigung von Wunden und Lungenentzündung bei Tieren in Intensivhaltung dient.

## Revendications

1. La litière pour les ongulés et les autres animaux est **caractérisée en ce qu'elle** comprend:
a) granulés de bois
b) milieu nutritif, qui est *Ascophyllum nodosum,* l'algue brune.

2. La litière selon la revendication 1 est **caractérisée en ce que** le milieu nutritif comprend en outre la montmorillonite et le sel amer.

3. La litière selon l'une quelconque des revendications 1 à 2 est **caractérisée en ce que** la quantité du milieu nutritif ajouté comprend entre 1 et 5 % (m/m) par rapport à la masse des granulés de bois.

4. La litière selon l'une quelconque des revendications 1 à 3 est **caractérisée en ce que** la litière contient en outre une ou plusieurs espèces des plantes médicinales choisies parmi la lavande, le lavandin, le laurier, la mélisse et le souci.

5. La litière selon la revendication 4 est **caractérisée en ce que** les plantes médicinales sont ajoutées en quantité jusqu'à concurrence de 2 % (m/m) de lavande et/ou lavandin, jusqu'à concurrence de 2 % (m/m) de laurier, jusqu'à concurrence de 2 % (m/m) de mélisse et jusqu'à concurrence de 2 % (m/m) de souci par rapport à la masse des granulés de bois.

6. L'utilisation de la litière selon l'une quelconque des revendications 1 à 5 est **caractérisée en ce qu'**elle sert d'agent pour empêcher les lésions ou la pneumonie des animaux dans l'élevage intensif.
